# EUROPEAN PATENT APPLICATION

(11) **EP 4 287 363 A1**
(43) Date of publication of application: **06.12.2023**
(21) Application number: 22779021.9
(22) Date of filing: 30.03.2022
(51) Int. Cl.: H01M 50/10

(54) **BATTERY PACK POWER CONNECTION SYSTEM AND VEHICLE**

(30) Priority: 30.03.2021 CN 202110339878
(71) Applicant: BYD Company Limited, Shenzhen, Guangdong 518118 (CN)
(72) Inventor: FANG, Cheng, Shenzhen, Guangdong 518118 (CN); PENG, Qingbo, Shenzhen, Guangdong 518118 (CN); XIONG, Bojun, Shenzhen, Guangdong 518118 (CN); E, Congji, Shenzhen, Guangdong 518118 (CN); GAO, Jian, Shenzhen, Guangdong 518118 (CN)
(74) Representative: Arnold & Siedsma
(86) International application number: PCT/CN2022/084077
(87) International publication number: WO 2022/206839

(57) **Abstract**

The present disclosure relates to a battery pack power connection system and a vehicle. The battery pack power connection system comprises a battery pack, a tray, a distribution box, a first drive connector, and a power connector. The battery pack comprises a plurality of battery cores. The tray is configured to support the battery pack. The distribution box is configured to distribute input or output information of the battery pack. One end of the first drive connector is connected with a first power system. The power connector is arranged in a cavity inner space of the tray, and the power connector is located between the plurality of battery cores. One end of the power connector is connected with the distribution box, and another end of the power connector is connected with another end of the first drive connector.

## Description

### CROSS REFERENCE TO RELATED APPLICATION

This application claims priority to and benefits of Chinese Patent Application No. 202110339878.8, filed on March 30, 2021. The entire content of the above-referenced application is incorporated herein by reference.

### FIELD

The present disclosure relates to the technical field of new energy vehicles, and particularly to a battery pack power connection system and a vehicle.

### BACKGROUND

Battery pack is the main power source of electric vehicles. An existing power connection form for battery packs is to electrically connect a connector and other components through a power connection busbar, such as a copper busbar or an aluminum busbar, to realize electrical transmission. In a battery pack of a four-wheel drive vehicle, a high-voltage distribution box is generally mounted at a head of the battery pack, a rear drive interface is close to a tail of the battery pack, and a power connection busbar spanning the entire battery pack is required for power connection. Therefore, how to design the power connection of the battery pack reasonably to make effective use of the space and improve the comfort of passengers is a problem to be solved.

### SUMMARY

The technical problem to be solved by the present disclosure is to design the power connection of the battery pack reasonably to make effective use of the space. Accordingly, a battery pack power connection system and a vehicle are provided.

To solve the above technical problems, according to one aspect, an embodiment of the present disclosure provides a battery pack power connection system, including: a battery pack comprising a plurality of battery cores; a tray configured to support the battery pack; a distribution box configured to distribute input or output information of the battery pack; a first drive connector, one end of the first drive connector being connected with a first power system; and a power connector arranged in a cavity inner space of the tray and located between the plurality of battery cores, one end of the power connector being connected with the distribution box, and another end of the power connector being connected with another end of the first drive connector.

According to an embodiment of the present disclosure, the power connector is located at a welding hole of an extrusion cavity of the tray, a height of the power connector is less than or equal to a height of the welding hole, and a width of the power connector is less than or equal to a width of the welding hole.

According to an embodiment of the present disclosure, the power connector is a busbar.

According to an embodiment of the present disclosure, the busbar includes a conductor and a slider; and the slider is arranged between the conductor and the tray and is configured to fill a gap between the busbar and the tray.

According to an embodiment of the present disclosure, one side of the slider facing away from the conductor is provided with a groove, a first bottom width of the groove is less than an outer width of the groove, and the groove is configured to fix the busbar to the tray when the tray is inserted into the groove.

According to an embodiment of the present disclosure, the slider includes a locking structure, and the locking structure is configured to lock and fix the slider and the tray.

According to an embodiment of the present disclosure, a surface of the conductor is coated with an insulating layer.

According to an embodiment of the present disclosure, the busbar further includes a damping part, the damping part is arranged on the conductor, and the damping part is pearl cotton or foam.

According to an embodiment of the present disclosure, the busbar further includes a bracket, one end of the bracket is fixedly connected with the distribution box, another end of the bracket is connected with the busbar, and the distribution box is fixedly connected with the tray.

According to an embodiment of the present disclosure, the another end of the bracket is provided with a groove, and the busbar is fixedly connected with the bracket through the groove.

According to an embodiment of the present disclosure, the busbar includes a conductor, and the conductor is fixed to the tray by a glue, or the conductor is fixed to the tray by filling a flexible material.

According to an embodiment of the present disclosure, the battery pack power connection system further includes a second drive connector, one end of the second drive connector is connected with a second power system, and another end of the second drive connector is connected with the power connector.

According to an embodiment of the present disclosure, the power connector connected between the distribution box and the power system is arranged in the cavity inner space of the battery pack tray, i.e., the power connector extends through the inside of the tray, so as to make effective use of space in the battery pack and improve the comfort of passengers or drivers.

According to another aspect, an embodiment of the present disclosure provides a vehicle. The vehicle includes a first power system, a second power system, and the battery pack power connection system according to the foregoing aspect.

### BRIEF DESCRIPTION OF THE DRAWINGS

FIG. 1 is a schematic structural diagram of a battery pack power connection system according to an embodiment of the present disclosure.
FIG. 2 is a cross-sectional view of a battery pack power connection system according to an embodiment of the present disclosure.
FIG. 3 is another cross-sectional view of a battery pack power connection system according to an embodiment of the present disclosure.
FIG. 4 is a schematic structural diagram of a battery pack power connection busbar according to an embodiment of the present disclosure.
FIG. 5 is a schematic three-dimensional diagram of a battery pack tray with an extrusion cavity according to an embodiment of the present disclosure.
FIG. 6 is a schematic structural diagram of a battery pack power connection busbar fixed by a bracket and positioned by a slider according to an embodiment of the present disclosure.
FIG. 7 is a detailed schematic structural enlarged view of a battery pack power connection busbar fixed by a bracket and positioned by a slider according to an embodiment of the present disclosure.

The reference numerals in the specification are as follow.
1. distribution box;
2. power connector; 21. conductor; 22. insulating layer; 23. damping part; 24. slider; 241. first groove; 243. locking structure; 25. bracket; 252. second groove;
3. battery pack; 31. battery core;
4. first drive connector;
5. tray; 51. welding hole;
6. second drive connector;
7. bolt;
8. connection point; 81. first connection point; 82. second connection point;
91. first power system; 92. second power system.

### DETAILED DESCRIPTION

To make the technical problems to be solved by the present disclosure, technical solutions, and beneficial effects more comprehensible, the following further describes the present disclosure in detail with reference to the accompanying drawings and embodiments. It should be understood that the specific embodiments described herein are merely used for explaining the present disclosure, and are not intended to limit the present disclosure.

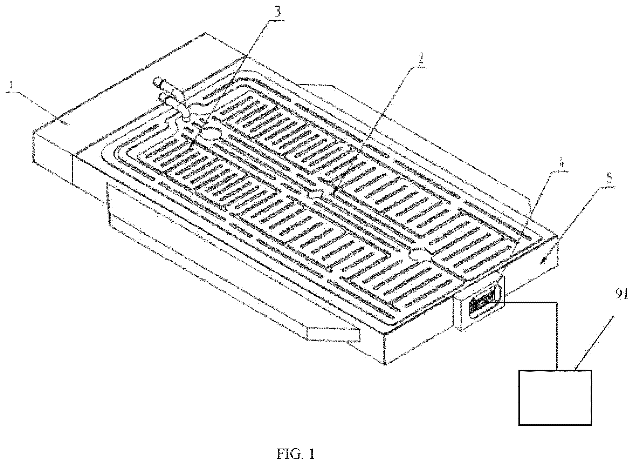

The battery pack power connection system of the present disclosure will be described in detail below with reference to the accompanying drawings. As shown in FIG. 1, FIG. 2, and FIG. 3, a battery pack power connection system provided in an embodiment of the present disclosure includes a battery pack 3, a tray 5, a distribution box 1, a power connector 2, and a first drive connector 4. The battery pack 3 includes a plurality of battery cores 31. The tray 5 is configured to support the battery pack 3. The distribution box 1 is configured to distribute input or output information of the battery pack 3. The power connector 2 is arranged in a cavity inner space of the tray 5, and the power connector 2 is located between the plurality of battery cores 31. One end of the first drive connector is connected with a power system (e.g., a first power system 91). One end of the power connector 2 is connected with the distribution box 1, and another end of the power connector is connected with one end of the first drive connector 4.

According to an embodiment of the present disclosure, the power connector 2 connected between the distribution box 1 and the power system is arranged in the cavity inner space of the battery pack tray 5, i.e., the power connector 2 extends through the inside of the tray 5, so as to make effective use of space in the battery pack and improve the comfort of passengers or drivers.

In an embodiment of the present disclosure, one end of the first drive connector 4 is connected with the battery pack 3, and another end of the first drive connector is connected with the first power system 91. The first drive connector 4 can connect to and transmit power of a rear drive system (e.g., motor) of a vehicle. The first drive connector 4 may be a high-voltage connector connected to a rear drive motor of the vehicle. Specifically, for the power system side, the connection between the battery pack and the power system may be achieved through the high-voltage connector connected to the rear drive motor of the vehicle; for the battery pack side, the connection between the battery pack and the power system may be achieved through the first drive connector 4. The first power system 91 may be a rear drive system such as a rear drive motor of the vehicle.

The distribution box 1 in the embodiments of the present disclosure may include electrical connection components such as a relay, a fuse, and a copper busbar. The distribution box is not limited in the present disclosure.

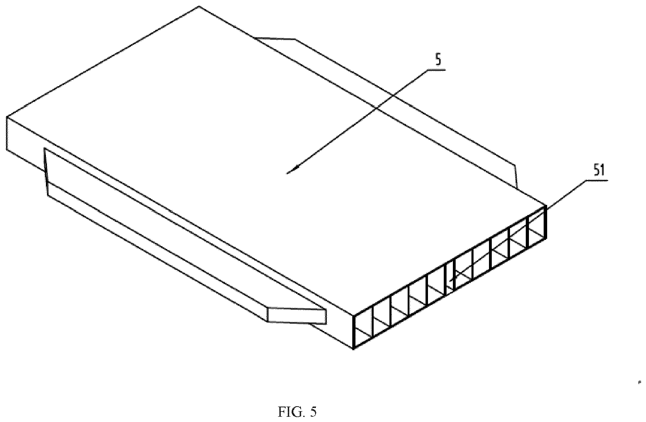

As shown in FIG. 5, in an embodiment of the present disclosure, the tray 5 has a hollow design in the middle. A welding hole 51 may be a hole defined in the middle of the tray 5 by two profiles tailor-welded together.

In an embodiment of the present disclosure, the power connector 2 is located in a welding hole 51 of an extrusion cavity of the tray 5. A height of the power connector 2 is less than or equal to a height of the welding hole 51, and a width of the power connector 2 is less than or equal to a width of the welding hole 51.

It should be understood that when the size of space of the welding hole 51 is sufficient for two or more power connectors 2 to pass through, for example, when the size of the welding hole 51 is larger than or equal to the size of two or more busbars, two or more busbars may be inserted into the same welding hole 51. In other words, two or more power connectors 2 (e.g., two or more busbars) may be stacked in a longitudinal direction of the vehicle according to the actual size to improve space utilization.

In the embodiment of the disclosure, the size of the power connector is smaller than the size of the welding hole, so that the space in the battery pack can be further fully and reasonably utilized, to prevent the size of the power connector (regardless of width or height) from being too large to lead to a large size of the entire battery pack and affect the arrangements in the space of the battery pack. In particular, passenger vehicles have high requirements on the size of the battery pack in the height direction, and the design of the embodiments of the present disclosure can meet the requirements of passenger vehicles, reasonably utilize the space, and improve the driving experience of the driver and the comfort of passengers.

In the embodiments of the present disclosure, the power connector can transmit power of the battery pack. Any device that can satisfy transmission conditions, for example, a busbar, can be used as the power connector. The busbar may be a copper busbar or an aluminum busbar.

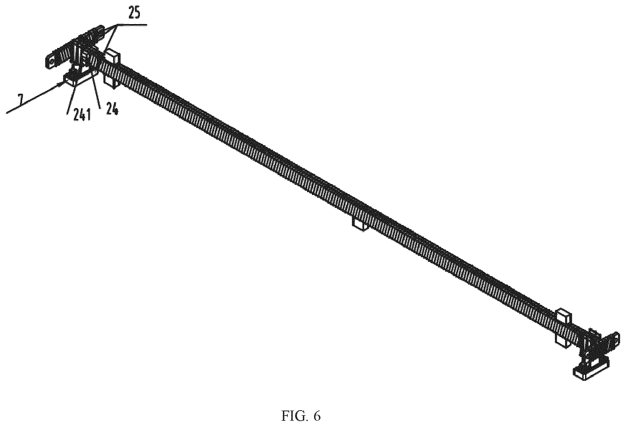

The busbar may be connected with the distribution box 1 through a connection point 8. For example, as shown in FIG. 6, a first connection point 81 is configured to connect the distribution box to the busbar. Specifically, the distribution box and the busbar may be connected at the connection point by a bolt.

In addition, the busbar may also be connected with the first drive connector (e.g., a rear drive connector) 4 through a connection point 8. For example, as shown in FIG. 6, a second connection point 82 is configured to connect the rear drive connector 4 to the busbar. Specifically, the rear drive connector and the busbar may be connected at the connection point by a bolt.

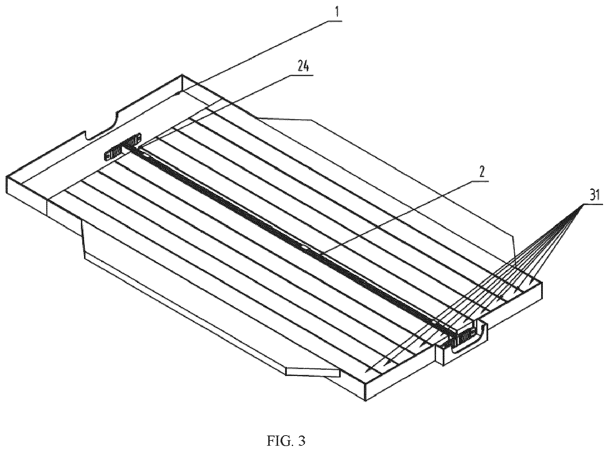

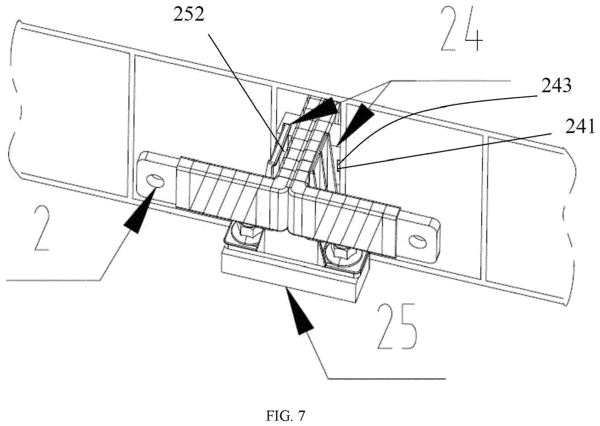

As shown in FIG. 3, FIG. 4, FIG. 6 and FIG. 7, in an embodiment of the present disclosure, the power connector 2 (e.g., busbar) may include a conductor 21 and a slider 24. The slider 24 is arranged between the conductor 21 and the tray 5 and is configured to fill a gap between the busbar and the tray 5. The slider 24 may be fixed on the busbar, or may be inserted into the gap between the busbar and the tray 5 after the busbar is inserted into the tray 5, to ensure that the power connection busbar does not shake or displace in the space defined by tailor-welding in the extrusion cavity of the tray 5, thereby realizing positioning and limiting of the tray and the busbar. The material of the slider 24 may be polymer plastic or the like.

In an embodiment of the present disclosure, one side of the slider 24 facing away from the conductor 21 is provided with a groove 241, and a bottom width of the groove 241 is less than an outer width of the groove 241. The groove 241 is designed to be narrow inside and wide outside, and is configured to fix the busbar to the tray 5 when the tray 5 is inserted into the groove 241. In other words, the slider 24 is slid into between the busbar and the tray 5 through guiding of the groove 241, so as to limit the busbar.

In an embodiment of the present disclosure, the slider 24 includes a locking structure 243, and the locking structure 243 is configured to lock and fix the slider 24 and the tray 5. For example, the locking structure 243 may be configured to resemble a door lock structure. In an embodiment, the locking structure 243 may include a push rod, a spring, a cavity, and a locking tab. In other words, a mechanical sliding structure or spring mechanism may be designed in the slider 24, so that the slider 24 is mechanically locked and fixed to the tray 5 when the slider 24 reaches a deepest position in the groove 241. In addition, the slider 24 may also be clamped by a fixed bracket 25. As shown in FIG. 6, to ensure the fixing stability.

In an embodiment of the present disclosure, a surface of the conductor 21 is coated with an insulating layer 22. The insulating layer 22 can isolate an electric current between the conductors 21 or between the conductor 21 and an external electrical part, and provide insulation and separation functions. In this way, the electric current in the conductor 21 is transmitted along the conductor 21, thereby ensuring the transmission of electric energy, and realizing the external electrical part is isolated from electrically conductive parts of conductor 21, and preventing potential safety hazards such as electric shock. The material of the insulating layer 22 may be a heat shrinkable tube, polyvinyl chloride (PVC), polyimide (PI), epoxy resin, or the like. The insulating layer 22 may be formed by coating an insulating material on the surface of the conductor 21 through spraying or extrusion.

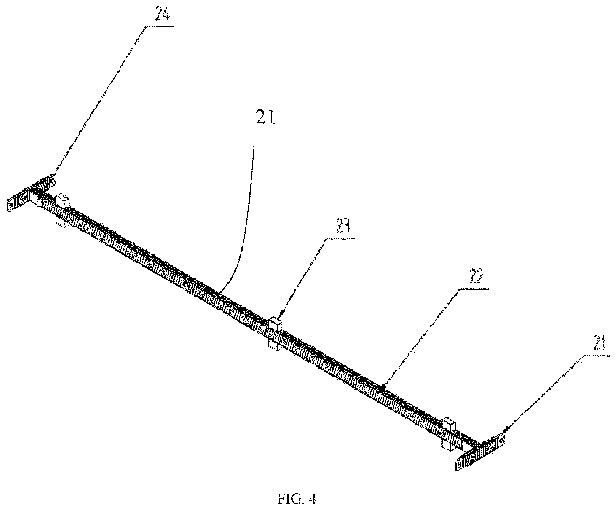

In addition, the surface of the insulating layer 22 of the conductor 21 may further be coated with a layer of wear-resistant and voltage-resistant material. For example, mica paper is further wound on the surface of the insulating material. This can strengthen the insulation effect, and achieve wear resistance and high temperature resistance. As shown in FIG. 4 and FIG. 6, in an embodiment of the present disclosure, the busbar may further include a damping part 23. The damping part 23 is arranged on the conductor 21. The damping part 23 provides a damping effect and can absorb vibration energy to reducing the adverse effects such as abnormal sound or accelerated aging of the conductor 21 caused by vibration during traveling of the vehicle. In an embodiment of the present disclosure, the damping part 23 may be designed as two separate parts respectively above and below the conductor 21 or may be designed as an integral part. The damping part 23 may be adhered to the conductor 21 or wound on the conductor 21. The specific design and composition of the damping part and the manner in which damping part is fixed to the conductor 21 are not limited in the present disclosure, and any design that can absorb energy and provide a damping effect falls within the protection scope of the present disclosure.

In the embodiments of the present disclosure, any material that can provide a damping effect may be used as the damping part 23. For example, the damping part 23 may be pearl cotton or foam.

The damping part 23 may be adhered to the insulating layer 22 on the surface of the conductor 21, i.e., the damping material may be adhered to the surface of the insulating layer 22 of the busbar or adhered to the surface of mica paper of reinforcing the insulation of the busbar.

The damping part 23 is supported by the tray 5 in the longitudinal direction and provides a function of supporting the busbar on the tray 5. In addition, the transverse dimension of the damping part 23, i.e., the dimension of the damping part 23 between the two sides of the tray 5, may be designed to be slightly smaller than the conductor 21, to provide a function of fixing the busbar. In other words, the busbar and the tray may be limited by the damping part.

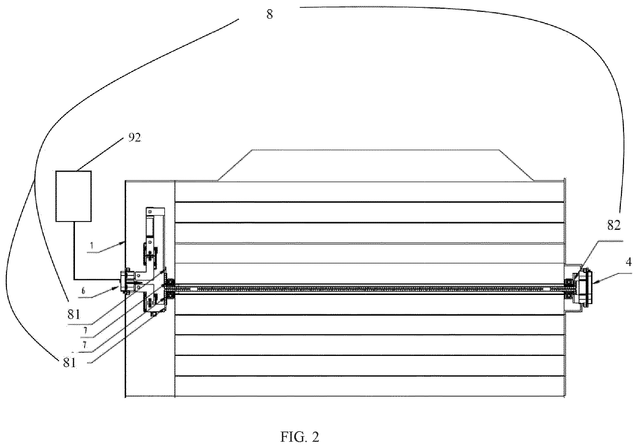

As shown in FIG. 2, FIG. 3, FIG. 6 and FIG. 7, in an embodiment of the present disclosure, the busbar further includes a bracket 25, one end of the bracket 25 is fixedly connected with the distribution box 1, another end of the bracket 25 is connected with the busbar, and the distribution box 1 is fixedly connected with the tray 5. During design of the distribution box 1, a nut or steel heli coil may be buried in advance to reserve an interface for connection with the bracket 25. The bracket may be fixedly connected to the distribution box by a bolt. For example, the bracket 25 may be fixed to the distribution box by a bolt 7. The distribution box 1 may be fixedly connected with the busbar through the bracket 25. For example, one end of the bracket clamps the busbar, and the other end may be fixed in the distribution box through bolt connection. The distribution box 1 and the tray 5 may be connected by welding on their surfaces.

The bracket 25 may be connected with the distribution box 1 in various forms. For example, the bracket 25 may also be connected to the distribution box 1 by a bolt. For another example, the bracket 25 may be connected to the distribution box 1 by a glue. For example, a recess and a limit hole may be reserved in the high-voltage distribution box 1. The bracket may be preliminarily fixed through the limit hole, and then the glue is poured into the recess to enhance the fixation. The amount of glue to be used depends on the vibration strength and adhesion strength. The connection mode using the glue is simple and easy to realize.

In an embodiment of the present disclosure, the another end of the bracket 25 may be provided with a groove, and the busbar is fixedly connected with the bracket 25 through the groove. For example, the bracket 25 may be fixed to the busbar by a fastener. The power connection busbar is clamped by a fastening apparatus whose groove width is slightly larger than a cross-sectional thickness of the power connection busbar, to ensure that the power connection busbar does not escape or shake. The material of the bracket 25 may be polypropylene (PP), polyamide 66 (PA66), etc.

In an embodiment of the present disclosure, the busbar includes a conductor 21, and the conductor 21 and the tray 5 may be fixed by a glue. The conductor 21 and the tray 5 may also be fixed by filling a flexible material.

The busbar may be connected with the distribution box 1 through a connection point 8. For example, as shown in FIG. 6, the first connection point 81 is configured to connect the distribution box to the busbar. Specifically, the distribution box and the busbar may be connected at the connection point by a bolt.

In addition, the busbar may also be connected with the first drive connector (e.g., a rear drive connector) 4 through the connection point 8. For example, as shown in FIG. 6, the second connection point 82 is configured to connect the rear drive connector 4 to the busbar. Specifically, the rear drive connector and the busbar may be connected at the connection point by a bolt.

The battery pack power connection system may further include a second drive connector 6. One end of the second drive connector 6 is connected with a second power system 92, and another end of the second drive connector 6 is connected with the power connector 2. The second power system 92 may be a front drive system such as a front drive motor. The second drive connector 6 may be a front drive connector connected to the front drive motor of the vehicle.

The busbar in the embodiments of the present disclosure may be assembled by the following steps. First, the power connection busbar is inserted into the space defined by tailor-welding in the extrusion cavity of the tray 5, and the mounting position of the power connection busbar is determined and limited by the damping part 23 and the slider 24. The copper busbar is completely fixed on the tray 5 by the fixing bracket 25, and finally the power connection busbar is bent to a suitable position to realize the power connection between the busbar and the high-voltage distribution box 1 and the rear drive connector (such as a second power connector 2).

In addition, an embodiment of the present disclosure provides a vehicle, including a first power system 91, a second power system 92, and the battery pack power connection system according to the above embodiment.

The terms "first" and "second" are used herein for purposes of description, and are not intended to indicate or imply relative importance or implicitly point out the number of the indicated technical feature. Therefore, the features defined by "first" and "second" may explicitly or implicitly include one or more features.

In the present disclosure, unless otherwise clearly specified and defined, the terms "mount", "connect", "couple", "fix" and variants thereof should be interpreted in a broad sense, for example, may be a fixed connection, a detachable connection, or an integral connection; may be a mechanical connection or an electrical connection; or may be a direct connection, an indirectly connection via an intermediate medium, or communication between the interiors of two components or an interaction relationship between two elements. For those of ordinary skill in the art, the specific meanings of the above terms in the present disclosure can be understood according to specific circumstances.

In the description of the specification, the description with reference to the terms "an embodiment", "one embodiment", "some embodiments", "example", "specific example", or "some example" and so on means that specific features, structures, materials or characteristics described in connection with the embodiment or example are embraced in at least one embodiment or example of the present disclosure. In the specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those skilled in the art.

The foregoing descriptions are merely optional embodiments of the present disclosure, but are not intended to limit the present disclosure. Any modification, equivalent replacement, or improvement made within the spirit and principle of the present disclosure shall fall within the protection scope of the present disclosure.

## Claims

1. A battery pack power connection system, comprising:
a battery pack (3) comprising a plurality of battery cores (31);
a tray (5) configured to support the battery pack;
a distribution box (1) configured to distribute input or output information of the battery pack (3);
a first drive connector (4), one end of the first drive connector (4) being connected with a first power system (91); and
a power connector (2) arranged in a cavity inner space of the tray (5) and located between the plurality of battery cores (31), one end of the power connector (2) being connected with the distribution box (1), and another end of the power connector (2) being connected with another end of the first drive connector (4).

2. The battery pack power connection system according to claim 1, wherein the power connector (2) is located at a welding hole of an extrusion cavity of the tray (5), a height of the power connector (2) is less than or equal to a height of the welding hole, and a width of the power connector (2) is less than or equal to a width of the welding hole.

3. The battery pack power connection system according to claim 1 or 2, wherein the power connector (2) is a busbar.

4. The battery pack power connection system according to claim 3, wherein the busbar comprises a conductor (21) and a slider (24); and
the slider (24) is arranged between the conductor (21) and the tray (5) and is configured to fill a gap between the busbar and the tray (5).

5. The battery pack power connection system according to claim 4, wherein one side of the slider (24) facing away from the conductor (21) is provided with a first groove (241), a first bottom width of the first groove (241) is less than an outer width of the first groove (241), and the first groove (241) is configured to fix the busbar to the tray (5) when the tray (5) is inserted into the first groove (241).

6. The battery pack power connection system according to claim 4, wherein the slider (24) comprises a locking structure (243), and the locking structure (243) is configured to lock and fix the slider (24) and the tray (5).

7. The battery pack power connection system according to any one of claims 4-6, wherein a surface of the conductor (21) is coated with an insulating layer (22).

8. The battery pack power connection system according to any one of claims 4-6, wherein the busbar further comprises a damping part (23), the damping part (23) is arranged on the conductor (21), and the damping part (23) is pearl cotton or foam.

9. The battery pack power connection system according to any one of claims 4-6, wherein the busbar further comprises a bracket (25), one end of the bracket (25) is fixedly connected with the distribution box (1), another end of the bracket is connected with the busbar, and the distribution box (1) is fixedly connected with the tray (5).

10. The battery pack power connection system according to claim 9, wherein the another end of the bracket (25) is provided with a second groove (252), and the busbar is fixedly connected with the bracket (25) through the second groove (252).

11. The battery pack power connection system according to claim 3, wherein the busbar comprises a conductor (21), and the conductor (21) is fixed to the tray (5) by a glue, or the conductor (21) is fixed to the tray (5) by filling a flexible material.

12. The battery pack power connection system according to any one of claims 1-11, wherein the battery pack power connection system further comprises a second drive connector (6), one end of the second drive connector (6) is connected with a second power system (92), and another end of the second drive connector (6) is connected with the power connector (2).

13. A vehicle, **characterised in that** the vehicle comprises a first power system (91), a second power system (92), and the battery pack power connection system according to any one of claims 1-12.
